Europäisches Patentamt

European Patent Office

Office européen des brevets

(19)

(11) **EP 0 705 049 A2**

(12) **EUROPÄISCHE PATENTANMELDUNG**

(43) Veröffentlichungstag:
03.04.1996 Patentblatt 1996/14

(51) Int. Cl.$^6$: **H04Q 11/04**

(21) Anmeldenummer: 95113938.5

(22) Anmeldetag: 05.09.1995

(84) Benannte Vertragsstaaten:
AT BE CH DE DK ES FR GB IT LI NL SE

(30) Priorität: 28.09.1994 DE 4434724

(71) Anmelder: **SIEMENS AKTIENGESELLSCHAFT**
**D-80333 München (DE)**

(72) Erfinder: **Heiss, Herbert, Dr.**
**D-82110 Germering (DE)**

(54) **Verfahren und Schaltungsanordnung zur Planung der Übertragung von ATM-Zellen**

(57) Für zumindest ein Teil der über die ATM-Kommunikationseinrichtung verlaufenden virtuellen Verbindungen sind als charakteristische Parameter eine Spitzenbitrate sowie eine obere Grenze für eine mittlere Bitrate und eine Burst-Toleranz festgelegt. Zur Weiterleitung der diesen virtuellen Verbindungen zugehörigen Nachrichtenzellen über eine Ausgangsleitung wird einerseits nach Maßgabe der Anzahl der im Zuge der jeweiligen virtuellen Verbindung unter Berücksichtigung der Spitzenbitrate pro Zeiteinheit zufließenden und abfließenden Nachrichtenzellen eine minimale Verzögerungszeit ermittelt, um welche die Weiterleitung einer Nachrichtenzelle mindestens zu verzögern ist. Andererseits wird nach Maßgabe der Anzahl der im Zuge der jeweiligen virtuellen Verbindung unter Berücksichtigung der oberen Grenze der mittleren Bitrate pro Zeiteinheit zufließenden und abfließenden Nachrichtenzellen eine maximale Verzögerungszeit ermittelt, um welche die Weiterleitung einer Nachrichtenzelle höchstens zu verzögern ist. Unter Berücksichtigung der ermittelten minimalen und maximalen Verzögerungszeit wird schließlich eine Verzögerungszeit festgelegt, um eine gerade vorliegende Nachrichtenzelle weiterzuleiten.

**FIG 1**

EP 0 705 049 A2

## Beschreibung

Die Erfindung betrifft ein Verfahren und eine Schaltungsanordnung gemäß Oberbegriff des Patentanspruches 1 bzw. des Patentanspruches 5. Ein derartiges Verfahren und eine derartige Schaltungsanordnung sind bereits durch EP 0 498 092 A1 bekannt. Bei diesem wird als charakteristischer Parameter für die einzelnen virtuellen Verbindungen eine Spitzenbitrate festgelegt. Dabei wird für jede eintreffende Nachrichtenzelle in Abhängigkeit von der für die zugehörige virtuelle Verbindung festgelegten Spitzenbitrate und dem zeitlichen Abstand der zu der gleichen virtuellen Verbindung gehörenden, zur Weiterleitung bestimmten Nachrichtenzellen ein Zeitschlitz ermittelt, in dem eine gerade vorliegende Nachrichtenzelle weitergeleitet werden soll. Eine Weiterleitung von Nachrichtenzellen erfolgt jedoch lediglich dann, wenn für diese ein Zeitschlitz ermittelt wird, der einen vorgegebenen zeitlichen Abstand zu dem aktuellen Zeitpunkt nicht überschreitet.

Darüber hinaus ist bereits durch die nicht vorveröffentlichte europäische Patentanmeldung 93 120 828.4 ein Verfahren zum statistischen Muliplexen von Nachrichtenzellen, die mit einer konstanten Länge im Zuge von virtuellen Verbindungen nach einem asynchronen Übertragungsverfahren übertragen werden, in einer Anordnung vorgeschlagen worden, bei der eine Mehrzahl von Eingangsleitungen und eine Ausgangsleitung gegeben sind. Dabei werden für jede virtuelle Verbindung eine minimale Nachrichtenzellenübertragungsrate und eine Maximalzahl von die Nachrichtenzellenübertragungsrate überschreitenden Nachrichtenzellen festgelegt. Darüber hinaus werden Nachrichtenzellenzyklen durch die Übertragungsdauer einer Nachrichtenzelle bei einer festgelegten Übertragungsbitrate definiert, in denen jeweils auf den Eingangsleitungen eine Mehrzahl von Nachrichtenzellen herangeführt werden können und höchstens eine Nachrichtenzelle auf der Ausgangsleitung weitergeleitet werden kann.

Dabei ist vorgesehen, daß der genannten Anordnung eine Speichereinrichtung mit einer Vielzahl von jeweils eine Nachrichtenzelle aufnehmenden Speicherplätzen zugehörig ist. Bei dieser Speichereinrichtung ist eine mit einer Vielzahl von Speicherelementen gebildete Zeitachse gegeben, die durch einen Zeitzeiger mit jedem Nachrichtenzellenzyklus fortschreitend zyklisch angesteuert wird. Für jede ankommende Nachrichtenzelle wird unter Auswertung der für die zugehörige virtuelle Verbindung festgelegten Größen ein Zeitrang bestimmt, der angibt, zu welchem spätest zulässigen Zeitpunkt die jeweilige Nachrichtenzelle weitergeleitet werden muß. Die jeweilige Nachrichtenzelle wird dabei in einem Speicherplatz gespeichert, dessen Adresse in dem Speicherelement der Zeitachse gespeichert wird, das dem ermittelten Zeitrang entspricht. Für den Fall, daß in einem durch den Zeitzeiger angesteuerten Speicherelement ein Eintrag auf den Speicherplatz einer Nachrichtenzelle verweist, wird diese Nachrichtenzelle für eine unmittelbare Weiterleitung an die Ausgangsleitung in eine Ausleseliste eingetragen. Falls in dem augenblicklichen Nachrichtenzellenzyklus keine Nachrichtenzelle in der Ausleseliste eingetragen ist, wird eine Eintragung nur der einen Nachrichtenzelle in die Ausleseliste bewirkt und ein Lesezähler schreitet in der Zeitachse bis zum Eintrag für eine Nachrichtenzelle mit dem nächstfolgenden Zeitrang fort. Für den Fall, daß für eine ankommende Nachrichtenzelle ein Zeitrang ermittelt wird, der zwischen den augenblicklichen Positionen des Zeitzeigers und des Lesezeigers liegt, wird diese Nachrichtenzelle unmittelbar in die Ausleseliste eingetragen.

Es ist nun Aufgabe der vorliegenden Erfindung, einen Weg zu zeigen, wie ein Verfahren und eine Schaltungsanordnung der eingangs genannten Art ausgebildet werden können, um im Zuge von virtuellen Verbindungen, für welche gegenüber dem Stand der Technik abweichende charakteristische Parameter festgelegt sind, übertragene Nachrichtenzellen über eine Ausgangsleitung weiterleiten zu können.

Gelöst wird diese Aufgabe bei einem Verfahren gemäß Oberbegriff des Patentanspruches 1 durch die in diesem Patentanspruch angegebenen Verfahrensmerkmale. Der Vorteil der Erfindung besteht dabei darin, daß die Weiterleitung von Nachrichtenzellen über die betreffende Ausgangsleitung weitestgehend entsprechend den für die jeweilige virtuelle Verbindung festgelegten charakteristischen Parametern erfolgt und somit die Einhaltung der einzelnen charakteristischen Parameter gesondert in nachfolgenden Einrichtungen überwacht werden kann.

Eine zweckmäßige Ausgestaltung des Verfahrens gemäß der vorliegenden Erfindung ergibt sich aus dem Patentanspruch 2. Der Vorteil dieser Ausgestaltung besteht dabei darin, daß durch die Verzögerung einer weiterzuleitenden Nachrichtenzelle um wenigstens einen Zeitschlitz die Steuerungsvorgänge im Zusammenhang mit der Aufnahme von Nachrichtenzellen und die Steuerungsvorgänge für die Weiterleitung dieser Nachrichtenzellen parallel durchgeführt werden können. Weitere zweckmäßige Ausgestaltungen des Verfahrens gemäß der vorliegenden Erfindung ergeben sich aus den Patentansprüchen 3 und 4.

Die vorstehend genannte Aufgabe wird bei einer Schaltungsanordnung der eingangs genannten Art durch die im Patentanspruch 5 angegebenen schaltungstechnischen Merkmale gelöst. Der Vorteil dieser Schaltungsanordnung sowie der zweckmäßigen Ausgestaltungen gemäß den Patentansprüchen 6 bis 8 besteht dabei in dem relativ geringen schaltungstechnischen Aufwand, um die dieser Schaltungsanordnung zugeführten Nachrichtenzellen weitestgehend unter Beibehaltung der für die einzelnen virtuellen Verbindungen festgelegten charakteristischen Parameter durchzuführen.

Im folgenden wird die vorliegende Erfindung anhand von Zeichnungen beispielsweise näher erläutert.

FIG 1          zeigt ein Blockschaltbild einer Schaltungsanordnung, bei welcher die vorliegende Erfindung angewandt ist, und
FIG 2 und 3    zeigen Ablaufdiagramme, auf welche im folgenden näher eingegangen wird.

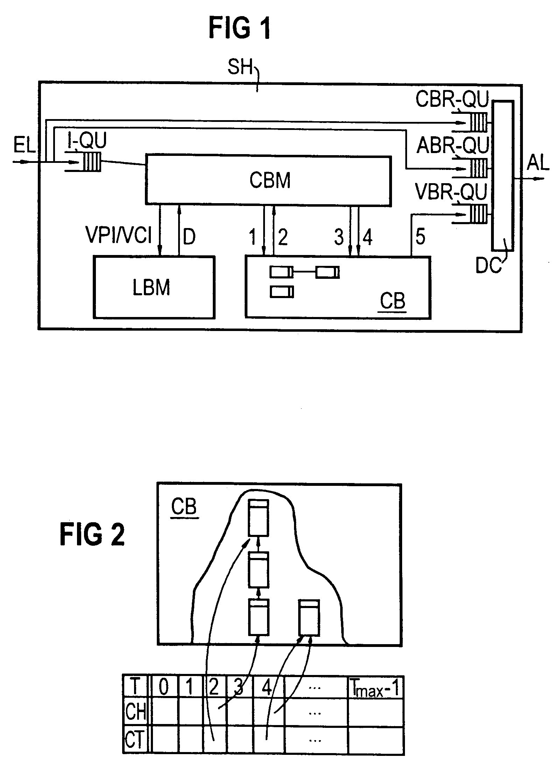

FIG 1 zeigt in schematischer Form den Aufbau einer Behandlungseinrichtung SH, welche beispielsweise einer Ausgangsleitung einer nach einem asynchronen Transfermodus arbeitenden ATM-Kommunikationseinrichtung zugeordnet sein kann, um der dieser Kommunikationseinrichtung im Zuge virtueller Verbindungen über Eingangsleitungen zugeführten Nachrichtenzellen nach einem statistischen Multiplexprinzip über die betreffende Ausgangsleitung weiterzuleiten. Bei dieser ATM-Kommunikationseinrichtung kann es sich dabei um eine ATM-Vermittlungseinrichtung, um einen sogenannten ATM-Cross-Connect oder um eine ATM-Multiplexeinrichtung handeln.

Die der Behandlungseinrichtung SH zugeführten Nachrichtenzellen weisen in bekannter Weise eine feste Länge auf und verfügen jeweils neben einem Informationsteil für die Übertragung der eigentlichen Nutzinformationen über einen Zellenkopf, in welchem unter anderem Angaben bezüglich der jeweiligen virtuellen Verbindung bzw. des jeweiligen virtuellen Pfades enthalten sind. Die jeweilige Verbindung möge dabei durch eine sogenannte virtuelle Kanalnummer VCI, ein virtueller Pfad dagegen durch eine sogenannte virtuelle Pfadnummer VPI bezeichnet sein. Die Länge eines solchen Zellenkopfes umfaßt beispielsweise 5 Oktetts. Der genannte Informationsteil ist dagegen aus 48 Oktetts gebildet, um die eigentlichen Nutzinformationen zu übertragen. Unter Nutzinformationen sollen dabei allgemein Nachrichtensignale in digitaler Form verstanden werden, unter welche beispielsweise Nachrichten- und Textsignale sowie Sprach- bzw. Videosignale in digitaler Form fallen. In Übertragungspausen werden im übrigen Nachrichtenzellen entsprechende Leerzellen übertragen.

Im folgenden wird davon ausgegangen, daß der Behandlungseinrichtung SH Nachrichtenzellen zugeführt werden, die virtuellen Verbindungen mit unterschiedlicher Verkehrscharakteristik zugehörig sind. Dabei mögen erste Verbindungen, die im folgenden als CBR-Verbindungen bezeichnet werden, lediglich durch eine festgelegte Spitzenbitrate ("Peak Bit Rate") definiert sein, während zweite, als VBR-Verbindungen bezeichnete Verbindungen durch eine Spitzenbitrate, eine Obergrenze einer mittleren Bitrate ("sustainable bit rate") sowie eine Burst-Toleranz charakterisiert sein. Weitere, hinsichtlich der Verkehrscharakteristik von den genannten Verbindungen abweichende Verbindungen werden als ABR-Verbindungen bezeichnet. Die Verkehrscharakteristik wird dabei im Zuge des Aufbaus der jeweiligen virtuellen Verbindung durch Angabe der genannten charakteristischen Parameter von der diese Verbindung anfordernden Teilnehmereinrichtung festgelegt. Diese charakteristischen Parameter werden in der Behandlungseinrichtung SH verbindungsindividuell festgehalten, und zwar in einer noch zu erläuternden Leaky-Bucket-Steuereinrichtung ("Leaky-Bucket-Manager") LBM.

Nach FIG 1 werden von den der Behandlungseinrichtung SH über eine Eingangsleitung EL zugeführte Nachrichtenzellen nach Maßgabe der in diesen geführten VPI/VCI die CBR-Verbindungen und ABR-Verbindungen zugehörige Nachrichtenzellen direkt einer CBR- bzw. ABR-Ausgangswarteschlange CBR-QU bzw. ABR-QU zugeführt. Diese beiden Ausgangs-Warteschlangen stehen ausgangsseitig mit einer Ausgangs-Steuereinrichtung OC in Verbindung, unter deren Steuerung die Nachrichtenzellen nacheinander in nachfolgend noch näher dargelegter Weise in periodisch wiederholt auftretenden Zeitrahmen mit jeweils einer Mehrzahl von m Zeitschlitzen an eine mit der Behandlungseinrichtung SH verbundene Ausgangsleitung AL weitergeleitet werden. Die einem Zeitrahmen zugeordneten Zeitschlitze mögen dabei mit 0 bis m-1 bezeichnet sein. Die Zeitdauer eines Zeitschlitzes entspricht dabei der Übertragungszeitdauer einer Nachrichtenzelle auf der Ausgangsleitung AL, d.h. pro Zeitschlitz wird eine Nachrichtenzelle weitergeleitet. Die Zeitdauer eines Zeitschlitzes wird im folgenden auch als Zellenzyklus bezeichnet.

VBR-Verbindungen zugehörige Nachrichtenzellen werden dagegen nach Maßgabe der in diesen geführten VPI/VCI zunächst einer Eingangs-Warteschlange I-QU zugeführt. Von den in dieser enthaltenen Nachrichtenzellen wird dabei pro Zellenzyklus lediglich eine festgelegte Anzahl einer Zellenpuffer-Steuereinrichtung ("Cell Puffer Manager") CBM zugeleitet und hier zunächst zwischengespeichert. Eine Kopie der in diesen Nachrichtenzellen enthaltenen VPI/VCI wird für eine Auswertung an eine Leaky-Bucket-Steuereinrichtung ("Leaky-Bucket-Manager") LBM weitergeleitet. Diese ermittelt anhand der für die jeweilige virtuelle Verbindung festgehaltenen, oben erwähnten charakteristischen Parameter einerseits nach Maßgabe der Anzahl der im Zuge der jeweiligen virtuellen Verbindung unter Berücksichtigung der Spitzenbitrate pro Zeiteinheit zufließenden und abfließenden Nachrichtenzellen den Zeitpunkt, zu welchem eine gerade zugeführte Nachrichtenzelle frühestens weiterzuleiten ist. Andererseits wird nach Maßgabe der Anzahl der im Zuge der jeweiligen virtuellen Verbindung unter Berücksichtigung der Obergrenze der mittleren Bitrate pro Zeiteinheit zufließenden und abfließende Nachrichtenzellen der Zeitpunkt errmittelt, zu welchem eine gerade zugeführte Nachrichtenzelle spätestens weiterzuleiten ist. Anhand dieser ermittelten Zeitpunkte wird schließlich eine Verzögerungszeit D ermittelt, um welche die gerade zugeführte Nachrichtenzelle unter Berücksichtigung der aktuellen Zeit T zu verzögern ist, d.h. in welchem Zeitschlitz die Nachrichtenzelle weiterzuleiten ist. Bei dem vorliegenden Ausführungsbeispiel wird dabei diese Verzögerungszeit in einer ganzzahligen Anzahl von Zeitschlitzen angegeben.

Angaben bezüglich der von der Leaky-Bucket-Steuereinrichtung LBM ermittelten Verzögerungszeit D werden der Zellenpuffer-Steuereinrichtung CBM zugeführt (in FIG 1). Dabei wird bei einer Verzögerungszeit D=0 die gerade vorliegende Nachrichtenzelle verworfen. Bei einer Verzögerungszeit D>0 wird dagegen die betreffende Nachrichtenzelle in einem Zellenpuffer ("cell buffer") CB zwischengespeichert (1 in FIG1). Dieser Zellenpuffer weist eine Vielzahl von Speicherplätzen auf, in welchen jeweils eine Nachrichtenzelle sowie ein Adressenzeiger ("pointer") speicherbar sind. Mit Hilfe dieser Adressenzeiger können Speicherplätze miteinander zu einer Speicherliste verkettet werden, indem durch den in einem Speicherplatz gespeicherten Adressenzeiger ein anderer Speicherplatz adressiert ist. Auf diese Weise wird u.a. eine als Freiliste bezeichnete Speicherliste geführt, in welcher alle momentan nicht belegten Speicherplätze miteinander verkettet sind. Der erste in dieser Freiliste geführte Speicherplatz wird dabei ausgekettet, um die gerade vorliegende Nachrichtenzelle in diesem zu speichern. Ein diesen Speicherplatz bezeichnender Adressenzeiger wird der Zellenpuffer-Steuereinrichtung CBM zugeführt (2 in FIG 1). Darüber hinaus ermittelt diese anhand der aktuellen Zeit T und der von der Leaky-Bucket-Steuereinrichtung LBM gelieferten Angaben bezüglich der Verzögerungszeit D den Zeitschlitz, zu dem die Nachrichtenzelle weiterzuleiten ist. Mit Hilfe des vorliegenden Adressenzeigers wird dann der die gerade gespeicherte Nachrichtenzelle enthaltende Speicherplatz in eine dem ermittelten Zeitschlitz zugeordnete Ausleseliste ("chain") eingekettet (3 in FIG 1). Dies erfolgt dadurch, daß der Adressenzeiger in dem momentan letzten Speicherplatz der Ausleseliste gespeichert und in dem gerade angeketteten Speicherplatz als Adressenzeiger eine festgelegte, das Ende der Ausleseliste anzeigende Information eingetragen wird.

Für die Verwaltung der den einzelnen Zeitschlitzen zugeordneten Ausleselisten ist in der Zellenpuffer-Steuereinrichtung CBM eine in FIG 2 schematisch dargestellte Zeittabelle mit einer der Anzahl der zu einem oben erwähnten Zeitrahmen gehörenden m Zeitschlitze entsprechenden Anzahl von Speicherelementen vorgesehen. In dem einem Zeitschlitz zugeordneten Speicherelement sind dabei zwei Informationen gespeichert, nämlich ein Adressenzeiger CH, der auf einen den Anfang der zugehörigen Ausleseliste darstellenden Speicherplatz zeigt, sowie ein Adressenzeiger CT, der auf eine das Ende der zugehörigen Ausleseliste darstellenden Speicherplatz zeigt. Zwei derartige, in dem Zellenpuffer CB gespeicherte Ausleselisten sind zusätzlich in FIG 2 angedeutet. In der ersten, dem Zeitschlitz 2 zugeordneten Ausleseliste sind drei Speicherplätze enthalten, so daß in den zugehörigen Adressenzeigern CH und CT unterschiedliche Adressen eingetragen sind. Demgegenüber weist die dem Zeitschlitz 4 zugeordnete Ausleseliste lediglich einen einzigen Speicherplatz auf, so daß die zugehörigen Adressenzeiger CH und CT auf den gleichen Speicherplatz zeigen.

Nachdem zuvor die Steuerungsvorgänge bei der Aufnahme von Nachrichtenzellen in die Behandlungseinrichtung SH und die damit verbundene zeitliche Einordnung dieser Nachrichtenzellen für die Weiterleitung erläutert worden sind, wird nunmehr auf die Weiterleitung der in dem Zellenpuffer CB gespeicherten Nachrichtenzellen näher eingegangen.

In der Zellenpuffer-Steuereinrichtung CBM ist eine der Anzahl m der in einem Zeitrahmen vorhandenen Zeitschlitze entsprechende Modulo-m-Zähleinrichtung vorgesehen, deren momentaner Zählerstand die aktuelle Zeit T anzeigt und mit jedem Beginn eines Zellenzyklus um den Wert 1 inkrementiert wird. Nach Maßgabe dieses momentanen Zählerstandes wird die in FIG 2 dargestellte Zeittabelle angesteuert, um die der aktuellen Zeit T zugeordneten Adressenzeiger CH und CT auszulesen. Für den Fall, daß durch diese Adressenzeiger das Vorhandensein zumindest eines Speicherplatzes in der Ausleseliste und damit zumindest einer weiterzuleitenden Nachrichtenzelle angezeigt ist, wird unter der Steuerung der Zellenpuffer-Steuereinrichtung CBM (4 in FIG 1) die in Frage kommende Ausleseliste des Zellenpuffers CB angesteuert, um die unter dem Speicherplatz bzw. unter den Speicherplätzen gespeicherte Nachrichtenzelle bzw. gespeicherte Nachrichtenzellen einer für die oben genannten VBR-Verbindungen vorgesehenen, ausgangsseitig mit der Ausgangs-Steuereinrichtung OC (FIG 1) verbundenen VBR-Ausgangswarteschlange VBR-QU zuzuführen (5 in FIG 1). Im Anschluß daran wird die Zeittabelle in FIG 2 aktualisiert, indem für die Adressenzeiger CH und CT ein den Leerzustand der Ausleseliste anzeigender Wert eingetragen wird. Außerdem werden die der bisherigen Ausleseliste zugehörigen Speicherplätze in die oben genannte Freiliste eingekettet.

Die Ausgangs-Steuereinrichtung OC (FIG 1) ist bei dem vorliegenden Ausführungsbeispiel derart ausgelegt, daß in jedem Zeitschlitz lediglich eine Nachrichtenzelle weitergeleitet wird. Dabei wird durch die Ausgangs-Steuereinrichtung OC eine Prioritätssteuerung durchgeführt, indem in der CBR-Ausgangswarteschlange CBR-QU gespeicherte Nachrichtenzellen Priorität gegenüber Nachrichtenzellen der VBR-Ausgangswarteschlange VBR-QU und diese wiederum Priorität gegenüber Nachrichtenzellen der ABR-Ausgangswarteschlange ABR-QU besitzen. Mit anderen Worten, Nachrichtenzellen der VBR-Ausgangswarteschlange VBR-QU werden lediglich bei leerer CBR-Ausgangswarteschlange QBR-QU weitergeleitet. Nachrichtenzellen der ABR-Ausgangswarteschlange ABR-QU werden dagegen nur dann berücksichtigt, wenn die beiden anderen Ausgangswarteschlangen leer sind.

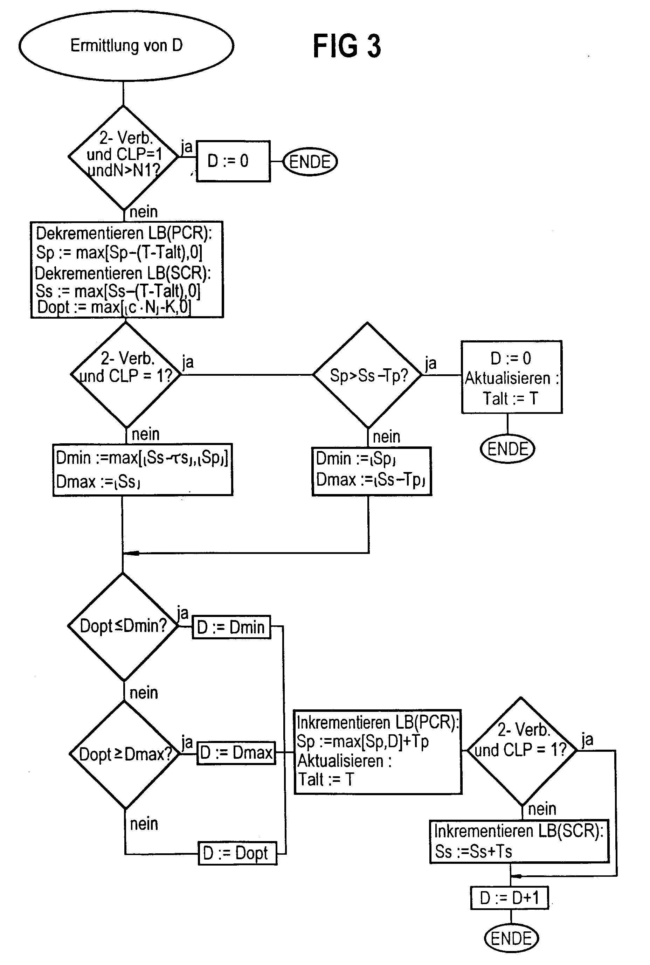

Die oben erwähnte Ermittlung der Verzögerungszeit D durch die Leaky-Bucket-Steuereinrichtung LBM wird nachfolgend anhand eines Ausführungsbeispiels unter Bezugnahme auf ein in FIG 3 dargestelltes Flußdiagramm näher beschrieben. Hierzu sei als Beispiel davon ausgegangen, daß zwei unterschiedliche Arten von VBR-Verbindungen auftreten mögen, für deren zugehörige Nachrichtenzellen eine hohe Zellenverlustpriorität CLP=0 oder eine niedrige Zellenverlustpriorität CLP=1 festgelegt werden kann. Eine erste Art von VBR-Verbindungen, die im folgenden als 1-Verbindungen bezeichnet sind, wird im Zuge des jeweiligen Verbindungsaufbaus durch eine Spitzenbitrate Rp und eine Obergrenze für die mittlere Bitrate Rs mit einer Burst-Toleranz $\tau s$ für den gesamten übertragenen Nachrichtenzellenstrom, d.h. unter Berücksichtigung der Nachrichtenzellen mit den Zellenverlustprioritäten CLP=0 und CLP=1, charakterisiert. Eine zweite Art von VBR-Verbindungen, die als 2-Verbindungen bezeichnet sind, wird dagegen durch eine Spitzenbitrate Rp für den gesamten übertragenen Nachrichtenzellenstrom und durch die Obergrenze der mittleren Bitrate Rs mit einer Burst-Toleranz ds für mit hoher Zellenverlustpriorität CLP=0 zu übertragende Nachrichtenzellen charakterisiert.

In der Leaky-Bucket-Steuereinrichtung LBM sind für jede der VBR-Verbindungen zwei Leaky-Bucket-Parametersätze sowie zwei Leaky-Bucket-Zähler LB geführt, nämlich ein Leaky-Bucket-Zähler LB(PCR) für die Spitzenbitrate sowie ein Leaky-Bucket-Zähler LB(SCR) für die Obergrenze der mittleren Bitrate. Die Funktionsweise eines solchen Leaky-Bucket-Zählers ist bereits bekannt. Außerdem sind die Leaky-Bucket-Parameter beispielsweise durch ATM-Forum: "ATM User-Network Interface Specification", Sept. 1993, definiert. Darüber hinaus wird durch die Leaky-Bucket-Steuereinrichtung LBM die Anzahl N der in der Behandlungseinrichtung SH momentan enthaltenen VBR-Nachrichtenzellen erfaßt. Diese Anzahl N wird dabei mit jeder aufgenommenen bzw. weitergeleiteten Nachrichtenzelle aktualisiert. Daneben wird eine Obergrenze N1 für die Anzahl der VBR-Nachrichtenzellen mit der niedrigen Zellenverlustpriorität CLP=1 festgehalten.

Mit dem Auftreten einer Nachrichtenzelle wird anhand der in dieser geführten VPI/VCI ermittelt, ob diese Nachrichtenzelle einer 2-Verbindung zugehörig und gleichzeitig CLP=1 und N>N1 gegeben ist. Ist dies der Fall, so wird der Zellenpuffer-Steuereinrichtung CBM eine Verzögerungszeit D=0 mitgeteilt, woraufhin die gerade zugeführte Nachrichtenzelle verworfen wird. D. h. Nachrichtenzellen einer 2-Verbindung mit CLP=1 werden verworfen, falls bereits viele VBR-Verbindungen zugehörige Nachrichtenzellen gespeichert sind.

Anderenfalls werden die momentanen Zählerstände der beiden Leaky-Bucket-Zähler LB(PCR) und LB(SCR) jeweils um einen Wert (T-Talt) dekrementiert, wobei T die oben bereits erwähnte aktuelle Zeit, Talt dagegen die Zeit angibt, zu der für die in Frage kommende Verbindung zuletzt eine Nachrichtenzelle aufgenommen worden ist. Damit ergibt sich für den Leaky-Bucket-Zähler LB(PCR) ein neuer Zählerstand Sp=max[Spalt-(T- Talt),0] . In entsprechender Weise nimmt der Leaky-Bucket-Zähler LB(SCR) einen Zählerstand Ss=max[Ssalt-(T- Talt),0] an. In beiden Fällen sind also lediglich Werte $\geqq 0$ zugelassen. Darüber hinaus wird

eine optimale Verzögerungszeit

$$Dopt=max[\lfloor cN-K \rfloor,0]$$

ermittelt, wobei c eine festgelegte Konstante ("scheduling constant"), N die oben genannte Anzahl von VBR-Nachrichtenzellen und K eine von der zulässigen Zellen-Verzögerungszeitschwankung abhängige Konstante darstellen. c ist bei dem vorliegenden Ausführungsbeispiel mit c=1/(1-p) festgelegt, wobei p die Gesamtlast durch die oben genannten PCR-Verbindungen darstellt. $\lfloor x \rfloor$ gibt dabei den ganzzahligen Teil des Wertes X an.

Anschließend wird überprüft, ob die vorliegende Nachrichtenzelle einer 2-Verbindung zugehörig und CLP=1 gegeben ist, d.h. daß eine niedrige Zellenverlustpriorität vorliegt. Ist dies der Fall und ist der Zählerstand des Leaky-Bucket-Zählers LB(PCR) Sp≦Ss-Tp mit Tp=1/Rp (Spitzenbitrate), so werden eine minimale Verzögerungszeit

$$Dmin=\lfloor Sp \rfloor$$

und eine maximale Verzögerungszeit

$$Dmax=\lfloor Ss-Tp \rfloor$$

festgelegt.

Liegt dagegen für den Leaky-Bucket-Zähler LP(PCR) ein Zählerstand Sp>Ss-Tp vor, so wird der Zählerpuffer-Steuereinrichtung CBM eine Verzögerungszeit D=0 zugeführt sowie der Wert Talt auf den Wert T gesetzt.

Ergibt die zuvor genannte, nach der Ermittlung der optimalen Verzögerungszeit Dopt durchgeführte Abfrage, daß keine 2-Verbindung mit CLP=1 vorliegt, so wird die minimale Verzögerungszeit Dmin mit

$$Dmin=max[\lfloor Ss-\tau s \rfloor,Sp]$$

festgelegt. Die maximale Verzögerungszeit Dmax wird dagegen auf den Wert

$$Dmax=\lfloor Ss \rfloor$$

gesetzt.

Nachdem die minimalen und maximalen Verzögerungszeiten ermittelt worden sind, wird nachfolgend überprüft, ob die ermittelte optimale Verzögerungszeit Dopt zwischen der minimalen und maximalen Verzögerungszeit Dmin und Dmax liegt. Ist dies der Fall, so wird als Verzögerungszeit D der Wert D=Dopt verwendet. Andernfalls wird bei Dopt≦Dmin die Verzögerungszeit D=Dmin bzw. bei Dopt≧Dmax die Verzögerungszeit D=Dmax gesetzt.

Danach wird der zahlerstand des Leaky-Bucket-Zählers LB(PCR) auf den Wert Sp=max[Sp,D]+Tp inkrementiert und die Zeit Talt auf den Wert T gesetzt. Außerdem wird für den Fall, daß keine 2-Verbindung mit CLP=1 vorliegt, der Leaky-Bucket-Zähler LB(SCR) auf den Wert Ss=Ss+Ts (mit Ts=1/Rs (Obergrenze der mittleren Bitrate)) inkrementiert. D.h. die Ermittlung der Verzögerungszeit D basiert für Nachrichtenzellen mit CLP=1 hauptsächlich auf der Spitzenbitrate für 1-Verbindungen.

Abschließend wird dann der ermittelte Verzögerungswert D auf den Wert D:=D+1 gesetzt, der dann der Zellenpuffer-Steuereinrichtung CBM in der oben angegebenen Weise für die weitere Behandlung einer gerade vorliegenden Nachrichtenzelle zugeführt wird. Die anhand der FIG 3 erläuterten Steuerungsvorgänge wiederholen sich dann mit jedem Auftreten einer weiteren Nachrichtenzelle.

Im übrigen wird durch das Setzen der Verzögerungszeit auf den Wert D:=D+1 erreicht, daß eine eintreffende Nachrichtenzelle wenigstens um eine Zeit D=1 verzögert wird, d.h. daß diese Nachrichtenzelle frühestens im nächsten Zellenzyklus weitergeleitet wird. Damit wird die Behandlung eintreffender Nachrichtenzellen von der Behandlung weiterzuleitender Nachrichtenzellen entkoppelt.

**Patentansprüche**

1. Verfahren zum Weiterleiten von einer nach einem asynchronen Transfermodus arbeitenden ATM-Kommunikationseinrichtung im Zuge virtueller Verbindungen über zumindest eine Zubringerleitung zugeführten Nachrichtenzellen an eine für die jeweilige virtuelle Verbindung in Frage kommende Abnehmerleitung (AL), auf welcher für die Weiterleitung von Nachrichtenzellen periodisch wiederholt auftretende Zeitrahmen mit jeweils einer Mehrzahl von Zeitschlitzen festgelegt ist, wobei für die jeweilige virtuelle Verbindung im Zuge des Verbindungsaufbaus charakteristische Parameter festgelegt werden, durch welche der Nachrichtenzellenstrom der jeweiligen virtuellen Verbindung definiert ist, und nach Maßgabe dieser charakteristischen Parameter und der Anzahl der im Zuge der jeweiligen virtuellen Verbindung pro Zeiteinheit zufließenden und abfließenden Nachrichtenzellen für jede aufgenommene Nachrichtenzelle ein für deren Weiterleitung bevorzugter Zeitschlitz ermittelt und die jeweilige Nachrichtenzelle in eine dem zu benutzenden Zeitschlitz zugeordnete Ausgabe-Liste eingefügt wird, und wobei die den einzelnen Zeitschlitzen zugeordneten Ausgabe-Listen nacheinander für eine Weiterleitung der in diesen jeweils enthaltenen Nachrichtenzelle bzw. Nachrichtenzellen ausgewählt werden,
**dadurch gekennzeichnet,**
daß als charakteristische Parameter zumindest für eine erste Art von virtuellen Verbindungen jeweils eine Spitzenbitrate sowie eine obere Grenze für eine mittlere Bitrate und eine Burst-Toleranz festgelegt werden,
daß einerseits nach Maßgabe der Anzahl der im Zuge der jeweiligen virtuellen Verbindung unter Berücksichtigung der Spitzenbitrate pro Zeiteinheit zufließenden und abfließenden Nachrichtenzellen eine minimale Verzögerungszeit ermittelt wird, um welche die Weiterleitung einer gerade zugeführten Nachrichtenzelle mindestens zu verzögern ist,
daß andererseits nach Maßgabe der Anzahl der im Zuge der jeweiligen virtuellen Verbindung unter Berücksichtigung der oberen Grenze der mittleren Bitrate pro Zeiteinheit zufließenden und abfließenden Nachrichtenzellen eine maximale Verzögerungszeit ermittelt wird, um welche die Weiterleitung einer gerade zugeführte Nachrichtenzelle höchstens zu verzögern ist,
und daß unter Berücksichtigung der minimalen und der maximalen Verzögerungszeit eine Verzögerungszeit und damit der Zeitschlitz festgelegt wird, in welchem die betreffende Nachrichtenzelle weiterzuleiten ist.

2. Verfahren nach Anspruch 1,
**dadurch gekennzeichnet,**
daß die Verzögerungszeit als ganzzahlige Anzahl von Zeitschlitzen ermittelt wird
und daß eine Nachrichtenzelle lediglich dann weitergeleitet wird, wenn für diese eine Verzögerungszeit > 0 ermittelt worden ist.

3. Verfahren nach Anspruch 1 oder 2,
**dadurch gekennzeichnet,**
daß eine optimale Verzögerungszeit aus einem Wert proportional zur Anzahl der momentan für eine Weiterleitung anstehenden Nachrichtenzellen ermittelt wird,
daß dieser Wert berücksichtigt wird, falls dieser in dem Intervall zwischen minimaler und maximaler Verzögerungszeit liegt,
und daß bei einer optimalen Verzögerungszeit, die kleiner oder gleich der minimalen Verzögerungszeit ist, die minimale Verzögerungszeit bzw. bei einer optimalen Verzögerungszeit, die größer oder gleich der maximalen Verzögerungszeit ist, die maximale Verzögerungszeit berücksichtigt wird.

4. Verfahren nach einem der Ansprüche 1 bis 3,
**dadurch gekennzeichnet,**
daß über die jeweilige Abnehmerleitung neben der ersten Art von virtuellen Verbindungen eine zweite und eine dritte Art von virtuellen Verbindungen verlaufen,

daß für die zweite Art von virtuellen Verbindungen als charakteristische Parameter eine Spitzenbitrate festgelegt wird, daß für die dritte Art von virtuellen Verbindungen von der ersten und zweiten Art von virtuellen Verbindungen abweichende charakteristische Parameter festgelegt sind

und daß Nachrichtenzellen der zweiten und dritten Art von virtuellen Verbindungen ohne Ermittlung einer Verzögerungszeit weitergeleitet werden, wobei für die Weiterleitung von Nachrichtenzellen den virtuellen Verbindungen der zweiten Art Priorität gegenüber den virtuellen Verbindungen der ersten Art und diesen wiederum Priorität gegenüber den virtuellen Verbindungen der dritten Art von virtuellen Verbindungen eingeräumt wird.

5. Schaltungsanordnung zum Weiterleiten von einer nach einem asynchronen Transfermodus arbeitenden ATM-Kommunikationseinrichtung im Zuge virtueller Verbindungen über zumindest eine Zubringerleitung zugeführten Nachrichtenzellen an eine für die jeweilige virtuelle Verbindung in Frage kommende Abnehmerleitung (AL), auf welcher für die Weiterleitung von Nachrichtenzellen periodisch wiederholt auftretende Zeitrahmen mit jeweils einer Mehrzahl von Zeitschlitzen festgelegt ist, wobei für die jeweilige virtuelle Verbindung im Zuge des Verbindungsaufbaus charakteristische Parameter festgelegt werden, durch welche der Nachrichtenzellenstrom der jeweiligen virtuellen Verbindung definiert ist, und nach Maßgabe dieser charakteristischen Parameter und der Anzahl der im Zuge der jeweiligen virtuellen Verbindung pro Zeiteinheit zufließenden und abfließenden Nachrichtenzellen für jede aufgenommene Nachrichtenzelle ein für deren Weiterleitung zu benutzender Zeitschlitz ermittelt und die jeweilige Nachrichtenzelle in eine dem zu benutzenden Zeitschlitz zugeordnete Ausgabe-Liste eingefügt wird,

und wobei die den einzelnen Zeitschlitzen zugeordneten Ausgabe-Listen nacheinander für eine Weiterleitung der in diesen jeweils enthaltenen Nachrichtenzelle bzw. Nachrichtenzellen ausgewählt werden,

**dadurch gekennzeichnet,**

daß zumindest in einem Teil von mit der ATM-Kommunikationseinrichtung verbundenen Teilnehmereinrichtungen Mittel zur Abgabe von charakteristischen Parametern für die jeweilige virtuelle Verbindung bezüglich einer Spitzenbitrate sowie einer oberen Grenze für eine mittlere Bitrate und einer Burst-Toleranz vorgesehen sind,

daß der jeweiligen Abnehmerleitung Behandlungsmittel (SH) zugeordnet sind, welche derart ausgebildet sind,

daß nach Maßgabe der Anzahl der im Zuge der jeweiligen virtuellen Verbindung unter Berücksichtigung der Spitzenbitrate pro Zeiteinheit zufließenden und abfließenden Nachrichtenzellen eine minimale Verzögerungszeit ermittelt wird, um welche die Weiterleitung einer gerade zugeführten Nachrichtenzelle mindestens zu verzögern ist,

daß andererseits nach Maßgabe der Anzahl der im Zuge der jeweiligen virtuellen Verbindung unter Berücksichtigung der oberen Grenze der mittleren Bitrate pro Zeiteinheit zufließenden und abfließenden Nachrichtenzellen eine maximale Verzögerungszeit ermittelt wird, um welche die Weiterleitung einer gerade zugeführte Nachrichtenzelle höchstens zu verzögern ist

und daß unter Berücksichtigung der minimalen und der maximalen Verzögerungszeit eine Verzögerungszeit und damit der Zeitschlitz festgelegt wird, in welchem die betreffende Nachrichtenzelle weiterzuleiten ist.

6. Schaltungsanordnung nach Anspruch 5,
   **dadurch gekennzeichnet,**
   daß die Behandlungsmittel (SH) weiter derart ausgebildet sind,
   daß die Verzögerungszeit als ganzzahlige Anzahl von Zeitschlitzen angegeben ist
   und daß eine gerade aufgenommene Nachrichtenzelle lediglich dann weitergeleitet wird, wenn die dafür ermittelte Verzögerungszeit > 0 ist.

7. Schaltungsanordnung nach Anspruch 5 oder 6,
   **dadurch gekennzeichnet,**
   daß die Behandlungsmittel (SH) für jede der virtuellen Verbindungen über zwei Zähleinrichtungen verfügt, von denen eine erste Zähleinrichtung (LB(PCR)) zur Erfassung der pro Zeiteinheit zufließenden und abfließenden Nachrichtenzellen unter Berücksichtung der Spitzenbitrate, die verbleibende zweite Zähleinrichtung (LB(SCR)) dagegen zur Erfassung der pro Zeiteinheit zufließenden und abfließenden Nachrichtenzellen unter Berücksichtung der oberen Grenze der mittleren Bitrate dient,
   daß der momentane Zählerstand beider Zähleinrichtungen bei Auftreten einer Nachrichtenzelle um den Wert (T-Talt) dekrementiert wird, wobei T die aktuelle Zeit und Talt die Zeit, zu der zuletzt eine Nachrichtenzelle der jeweiligen Verbindung aufgetreten ist, bezeichnen,
   daß aus den daraus resultierenden momentanen Zählerständen der beiden Zähleinrichtungen eine minimale und eine maximale Verzögerungszeit ermittelt wird,
   daß zusätzlich eine optimale Verzögerungszeit aus einem Wert proportional zur Anzahl der momentan für eine Weiterleitung anstehenden Nachrichtenzellen ermittelt wird,
   daß dieser Wert berücksichtigt wird, falls dieser in dem Intervall zwischen minimaler und maximaler Verzögerungszeit liegt,
   und daß bei einer optimalen Verzögerungszeit, die kleiner oder gleich der minimalen Verzögerungszeit ist, die minimale Verzögerungszeit bzw. bei einer optimalen Verzögerungszeit, die größer oder gleich der maximalen Verzögerungszeit ist, die maximale Verzögerungszeit berücksichtigt wird.

8.  Schaltungsanordnung nach einem der Ansprüche 5 bis 7,
    **dadurch gekennzeichnet,**
    daß den Behandlungsmitteln (SH) zusätzlich Nachrichtenzellen einer zweiten Art von virtuellen Verbindungen, welche jeweils durch eine Spitzenbitrate charakterisiert sind, und einer dritten Art von virtuellen Verbindungen, welche jeweils durch von der ersten und zweiten Art von virtuellen Verbindungen zumindest teilweise abweichende charakteristische Parameter charakterisiert sind, zugeführt sind,
    daß den drei Arten von virtuellen Verbindungen jeweils eine gesonderte, für die Aufnahme von weiterzuleitenden Nachrichtenzellen dienende Ausgangs-Warteschlange (CBR-QU, VBR-QU, ABR-QU) zugeordnet sind,
    daß Nachrichtenzellen der ersten Art von virtuellen Verbindungen der zugeordneten Ausgangs-Warteschlange (VBR-QU) jeweils entsprechend der ermittelten Verzögerungszeit, Nachrichtenzellen der zweiten und dritten Art von virtuellen Verbindungen dagegen direkt der jeweils zugeordneten Ausgangs-Warteschlange (CBR-QU, ABR-QU) zugeführt sind und daß die Ausgangs-Warteschlangen durch mit diesen ausgangsseitig verbundene Auswahlmittel (OC) derart ansteuerbar sind, daß hinsichtlich der zeitschlitzweisen Weiterleitung Nachrichtenzellen der zweiten Art von virtuellen Verbindungen Priorität gegenüber Nachrichtenzellen der ersten Art von virtuellen Verbindungen und diese wiederum Priorität gegenüber Nachrichtenzellen der dritten Art von virtuellen Verbindungen besitzen.

# FIG 1

# FIG 2

# FIG 3

Ermittlung von D

2- Verb. und CLP=1 undN>N1? — ja → D := 0 → ENDE

nein

Dekrementieren LB(PCR):
$Sp := max[Sp-(T-Talt),0]$
Dekrementieren LB(SCR):
$Ss := max[Ss-(T-Talt),0]$
$Dopt := max[\lfloor c \cdot N \rfloor -K,0]$

2- Verb. und CLP = 1? — ja → Sp>Ss−Tp? — ja → D := 0
Aktualisieren : Talt := T → ENDE

nein (von 2-Verb. und CLP = 1?):
$Dmin :=max[\lfloor Ss-\tau s \rfloor,\lfloor Sp \rfloor]$
$Dmax :=\lfloor Ss \rfloor$

nein (von Sp>Ss−Tp?):
$Dmin :=\lfloor Sp \rfloor$
$Dmax :=\lfloor Ss-Tp \rfloor$

Dopt≤Dmin? — ja → D := Dmin

nein

Dopt≥Dmax? — ja → D := Dmax → Inkrementieren LB(PCR):
$Sp :=max[Sp,D]+Tp$
Aktualisieren : Talt := T → 2- Verb. und CLP = 1? — ja

nein (von Dopt≥Dmax?) → D := Dopt

nein (von 2-Verb. und CLP = 1?):
Inkrementieren LB(SCR):
$Ss :=Ss+Ts$

D := D+1 → ENDE